# EUROPÄISCHE PATENTSCHRIFT

(11) **EP 3 515 739 B1**
(45) Veröffentlichungstag und Bekanntmachung des Hinweises auf die Patenterteilung: **16.06.2021**
(21) Anmeldenummer: 17761247.0
(22) Anmeldetag: 01.09.2017
(51) Int. Cl.: B60K 6/26, B60K 6/387, F16F 15/12, B60K 6/485, B60K 6/48, B60K 6/40

(54) **ANTRIEBSSYSTEM FÜR KRAFTFAHRZEUGE**
DRIVE SYSTEM FOR MOTOR VEHICLES
SYSTÈME D'ENTRAÎNEMENT POUR VÉHICULES À MOTEUR

(30) Priorität: 21.09.2016 DE 102016218104
(43) Veröffentlichungstag der Anmeldung: 31.07.2019
(73) Patentinhaber: Voith Patent GmbH, 89522 Heidenheim (DE)
(72) Erfinder: DIETZ, Volker, 89547 Gerstetten (DE); GOTIC-PATZAK, Lidija, 89520 Heidenheim (DE); STROBL, Martin, 89522Heidenheim (DE); POLIFKE, Gregor, 89537 Giengen (DE); SCHÜTZ, Rainer, 73450 Neresheim (DE); TONEATTO, Marco, 89518 Heidenheim (DE)
(74) Vertreter: Voith Patent GmbH - Patentabteilung
(86) Internationale Anmeldenummer: PCT/EP2017/071965
(87) Internationale Veröffentlichungsnummer: WO 2018/054662

(56) Entgegenhaltungen:
- DE-A1- 10 043 735
- DE-A1- 19 704 769
- DE-A1- 19 942 445
- DE-A1- 19 942 445
- DE-A1-102007 021 015
- DE-A1-102010 029 435
- DE-A1-102014 216 980
- US-A1- 2008 051 249
- US-A1- 2008 051 249

## Beschreibung

Die Erfindung betrifft ein Antriebssystem, insbesondere für ein Kraftfahrzeug.

Ein derartiges Antriebssystem umfasst im Wesentlichen ein Antriebsmotor bzw. Verbrennungsmotor mit einer Kurbelwelle, ein auf der Kurbelwelle angeordnetes Schwungmassenelement, ein Dämpfer, welcher primärseitig mit dem Schwungmassenelement direkt oder indirekt gekoppelt ist, eine Getriebeeinrichtung mit Getriebeeingangswelle und Getriebeausgangswelle, wobei die Getriebeeingangswelle mit der Sekundärseite des Dämpfers gekoppelt ist und zwischen Getriebeeingangswelle und Getriebeausgangswelle eine Mehrfachkupplungsvorrichtung angeordnet ist.

Die Getriebeeinrichtung kann ein Automatgetriebe sein, wobei durch das Automatgetriebe verschiedene Kraftwege schaltbar sind, die auch über einen hydrodynamischen Wandler führen können. Insbesondere ist ein derartiges Getriebe in der EP 2 162 643 B1 dargestellt und beschrieben. Die offenbarte Getriebeeingangswelle weist bei diesem Getriebeaufbau einen Hohlwellenbereich auf, in dem eine Mehrfachkupplungsvorrichtung angeordnet ist, die primärseitig drehfest mit der Getriebeeingangswelle gekoppelt ist.

Durch Schalten einer Kupplung der Mehrfachkupplungseinheit werden die Eingangsplanetensätze wahlweise mit dem Antriebsmotor verbunden.

Das Gehäuse eines derartigen Automatgetriebes wird in der Regel direkt mittels einer Flanschverbindung mit dem Gehäuse des Antriebsmotors zu einem Antriebsstrang verbunden. Ein Antriebsystem, das einen Verbrennungsmotor, eine elektrische Maschine und eine Getriebeeinrichtchung umfasst, ist auch in DE19942445, US2008051249 und DE102014216980 offenbart.

Eine der Aufgaben der Erfindung ist es, ein alternatives Koppelschema vorzuschlagen, dass die Einbindung einer elektrischen Maschine in den Antriebsstrang erlaubt und einen modularen Aufbau aufweist.

Erfindungsgemäß wird diese Aufgabe mit einem Antriebssystem gemäß Anspruch 1 gelöst. Weitere vorteilhafte Ausgestaltungen und bevorzugte Lösungsvarianten sind in den hiervon abhängigen Unteransprüchen beschrieben.

Erfindungsgemäß wird ein Antriebssystem, insbesondere für ein Kraftfahrzeug, vorgeschlagen, umfassend einen Antriebsmotor mit einer Kurbelwelle, ein auf der Kurbelwelle angeordnetes Schwungmassenelement, einen Dämpfer welcher primärseitig mit dem Schwungmassenelement gekoppelt ist, eine Getriebeeinrichtung mit Getriebeeingangswelle, die einen Hohlwellenbereich aufweist, und Getriebeausgangswelle, wobei die Getriebeeingangswelle mit der Sekundärseite des Dämpfers gekoppelt ist und zwischen Getriebeeingangswelle un6d Getriebeausgangswelle eine Mehrfachkupplungsvorrichtung und zumindest zwei Planetensätzen angeordnet sind.

Erfindungsgemäß ist eine elektrische Maschine (E-Maschine) zwischen dem Schwungmassenelement bzw. Schwungrad und der Mehrfachkupplungsvorrichtung vorgesehen, wobei der Rotor der elektrischen Maschine derart mit dem Antriebsmotor gekoppelt sein, dass der Rotor stets mit der Drehzahl des Antriebsmotors dreht.

Die Anordnung der elektrischen Maschine an dieser Position ermöglicht alle üblichen Betriebsweisen eines Hybridantriebsstranges und erlaubt zudem einen einfachen Modularen Aufbau, durch den auch ein Nachrüsten einer elektrischen Maschine ermöglicht wird. Die elektrische Maschine kann als Motor oder Generator betrieben werden.

-Durch die direkte Kopplung der elektrischen Maschine kann beispielsweise sichergestellt werden, dass ständig Energie zur Bordnetzversorgung generatorisch bereitgestellt wird, sobald der Verbrennungsmotor läuft. Wobei auch ein Motorischer Betrieb der E-Maschine denkbar ist um Beispielsweise die Schaltvorgänge im Automatgetriebe zu unterstützen oder auch um die Drehzahl des Antriebsmotors zu beeinflussen. Weiterhin kann die E-Maschine für die Stopp-Start Funktion eingesetzt werden.

Weiterhin kann vorgesehen sein, dass der Rotor der elektrischen Maschine direkt oder indirekt mit der Getriebeeingangswelle gekoppelt ist. So kann weiterhin der Rotor der elektrischen Maschine auch direkt mit der Sekundärseite des Dämpfers gekoppelt sein. Durch diese Anordnung ist auch die elektrische Maschine von den Schwingungen des Antriebsmotors entkoppelt.

Alternativ kann vorgesehen sein, dass der Rotor der elektrischen Maschine direkt oder indirekt mit der Kurbelwelle des Antriebsmotors gekoppelt ist. Beispielsweise kann der Rotor der elektrischen Maschine direkt oder indirekt mit der primärseitig mit dem Dämpfer gekoppelt sein. Durch diese Anordnung der elektrischen Maschine ist der Getriebeeingang von jeder antriebsseitigen Schwingung entkoppelt.

Weiterhin kann vorgesehen werden, dass die elektrische Maschine radial außerhalb des Dämpfers angeordnet ist, wobei der Dämpfer vollständig innerhalb der axialen Ausdehnung der elektrischen Maschine positioniert ist. Dabei können die elektrische Maschine und der Dämpfer in einem Zwischengehäuse eines Zwischenmoduls angeordnet sein, welches über eine Flanschverbindung mit dem Antriebsmotorgehäuse und über eine Flanschverbindung mit dem Getriebegehäuse verbindbar ist. Die Flanschverbindungen liegen in Verbindungsebenen des Antriebssystems und ermöglichen einen einfachen modularen Aufbau des Antriebsystems.

Erfindungsgemäß umfasst die Mehrfachkupplungsvorrichtung mehrere separate Kupplungseinheiten, deren Primärseiten im Hohlwellenbereich mit der Getriebeeingangswelle drehfest gekoppelt sind.

Der Rotor kann weiterhin an einem Rotorträger angeordnet sein, wobei der Rotorträger eine Impulsgeometrie aufweist, die dazu geeignet ist, die Position des Rotorträgers bzw. des Rotors mittels eines Pollagesensor zu bestimmen.

Der Dämpfer kann ein hydrodynamisches Dämpfungssystem umfassen.

Weitere Merkmale des erfindungsgemäßen Antriebssystem und weitere Vorteile der Erfindung ergeben sich aus der nachfolgenden Beschreibung bevorzugter Ausführungsbeispiele unter Bezugnahme auf die Zeichnungen.

Nachfolgend wird die Erfindung anhand von Skizzen näher erläutert.

In diesen zeigen:
- Figur 1: eine erste Ausführung des Antriebsystems
- Figur 2: eine zweite Ausführung des Antriebssysems
- Figur 3a, b: den Rotorträgerausführungen mit Dreherfassungseinrichtung

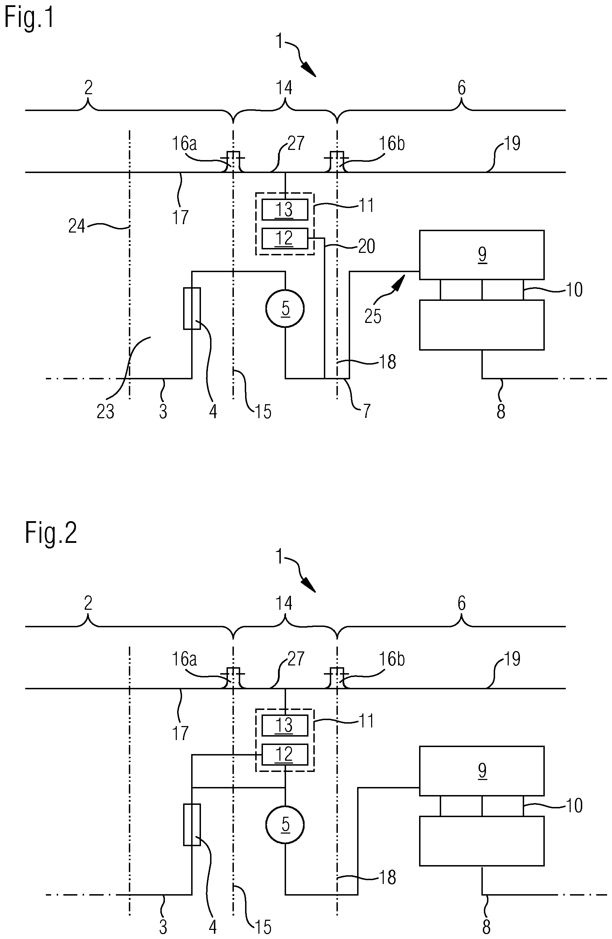

Figur 1 und 2 zeigen die zwei wesentlichen Ausführungsformen des erfindungsgemäßen Antriebsystems 1. Beide Ausführungsformen haben einen gemeinsamen Grundaufbau. Dieser Grundaufbau des Antriebssystems umfasst drei Funktionsbereiche, den Antriebsmotor 2 mit seinem Getriebegehäuse 17, das Zwischenmodul 14 mit seinem Zwischengehäuse 27 und die Getriebeeinrichtung 6 mit dem Getriebegehäuse 19. Die drei Gehäuse 17, 27 und 19 sind in den Verbindungsebenen 15 und 18 miteinander zu einer Einheit verbunden, wobei ein Gehäuseraum 23 für das Schwungmassenelement 4 und der Innenraum des Zwischengehäuses 27 eine ölfreien Raum bilden, der gegenüber den Ölkreisläufen im Antriebsmotor 2 und im Getriebe 6 gekapselt ist.

Aus dem geschlossenen Getriebegehäuse 17 des Antriebsmotors 2 ragt nur dessen Kurbelwelle 3 durch die Trennebenen 24 heraus. Auf der Kurbelwelle 3 ist das Schwungmassenelement 4 angeordnet bzw. mit dieser drehfest verbunden. An das Schwungmassenelement 4 ist der Dämpfer 5 mit seiner Primärseite angeschlossen. Sekundärseitig ist der Dämpfer 5 mit der Getriebeeingangswelle 7 des Getriebes 6 gekoppelt.

Bei dem Getriebe 6 handelt es sich um ein Automatgetriebe mit einer Getriebeeingangswelle 7 die einen Hohlwellenbereich 25 aufweist. Mittels der Mehrfachkupplungsvorrichtung 9, die mehrere Kupplungseinheiten 10 umfasst, können die hier nicht dargestellten Planetensätze derart geschaltet werden, dass an der Getriebehauptwelle (8) die gewünschte Übersetzung anliegt. Weiterhin nicht dargestellt sind Wandler, Retarder, Kupplungen und mindestens ein weiterer Planentensatz im nachfolgenden Getriebegebereich, wie in der EP 2 162 643 B1 beschrieben.

Eine weitere Gemeinsamkeit der beiden Antriebssysteme ist die Anordnung der elektrischen Maschine 11 in Bezug auf den Dämpfer 5. Die elektrische Maschine (11) ist in beiden Fällen radial außerhalb des Dämpfers (5) angeordnet, wobei der Dämpfer (5) vollständig innerhalb der axialen Ausdehnung der elektrischen Maschine (11) positioniert ist.

Der Unterschied zwischen den beiden Ausführungsformen Fig 1 und Fig. 2 ist die Anordnung der elektrischen Maschine 11 in der Koppelstruktur.

So ist in Figur 1 der Rotor 12 über einen Rotorträger 20 auf der Getriebeeingangswelle 7 drehfest gelagert. Bei diesem Aufbau erhöhen Rotorträger 20 und Rotor 12 die abtriebsseitigen Drehmassen, so dass die Eigenfrequenz bei einem ungedämpften 2-Massen-Torsionsschwinger gesenkt wird. Dies verbessert die Laufruhe insbesondere bei niedrigen Drehzahlen bzw. großen Drehmomenten und der Abstand zur Resonanzfrequenz wird größer.

In Figur 2 ist der Rotor 12 auf der Primärseite des Dämpfers 5 zwischen Schwungmassenelement 4 und Dämpfer 5 in die Koppelstruktur eingebunden. Symbolisch sind hier mehrere Verbindungen dargestellt, wobei in der Praxis der Rotorträger als Verbindungselement zwischen Schwungradelement 4, Rotor 12 und Dämpfer 5 verwendet werden kann.

In beiden Koppelstrukturen ist die elektrische Maschine 11 derart mit dem Antriebsmotor 2 gekoppelt, dass der Rotor 12 stets mit der Drehzahl des Antriebsmotors 2 dreht.

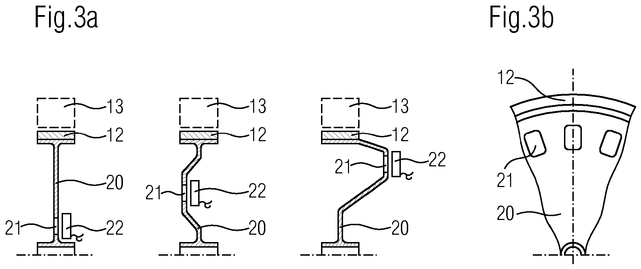

In Figur 3 a und b wird noch auf die für den Betrieb der elektrischen Maschine notwendigen Positionserkennungsvorrichtung eingegangen. Der Rotorträger 20 weist hierzu eine Impulsgeometrie 21 auf, die dazu geeignet ist, die Position des Rotorträgers 20 bzw. des Rotors 12 mittels eines Pollagesensor 22 zu bestimmen. Der Rotorträger kann bei Verwendung eines Pollagsensors 22 wie dargestellt sehr einfach an die unterschiedlichen Gegebenheiten angepasst werden.

### Bezugszeichenliste

- 1: Antriebssystem
- 2: Antriebsmotor
- 3: Kurbelwelle
- 4: Schwungmassenelement
- 5: Dämpfer
- 6: Getriebeeinrichtung
- 7: Getriebeeingangswelle
- 8: Getriebeausgangswelle
- 9: Kupplungseinrichtung
- 10: Kupplungseinheiten
- 11: elektrische Maschine
- 12: Rotor
- 13: Stator
- 14: Zwischenmodul
- 15: Verbindungsebene
- 16a, b: Flanschverbindung
- 17: Antriebsmotorgehäuse
- 18: Verbindungsebene
- 19: Getriebegehäuse
- 20: Rotorträger
- 21: Impulsgeometrie
- 22: Pollagesensor
- 23: Schwungradraum
- 24: Trennebene
- 25: Hohlwellenbereich
- 26: Dichtung
- 27: Zwischengehäuse

## Patentansprüche

1. Antriebssystem (1), insbesondere für ein Kraftfahrzeug, umfassend einen Antriebsmotor (2) mit einer Kurbelwelle (3), ein auf der Kurbelwelle (3) angeordnetes Schwungmassenelement (4), ein Dämpfer (5) welcher primärseitig mit dem Schwungmassenelement (4) gekoppelt ist, eine Getriebeeinrichtung (6) mit Getriebeeingangswelle (7), die einen Hohlwellenbereich (25) aufweist, und Getriebeausgangswelle (8), wobei die Getriebeeingangswelle (7) mit der Sekundärseite desDämpfers (5) gekoppelt ist und zwischen Getriebeeingangswelle (7) und Getriebeausgangswelle (8) eine Mehrfachkupplungsvorrichtung (9) und zumindest zwei Planetensätzen angeordnet sind, **dadurch gekennzeichnet,**
**dass** die Mehrfachkupplungsvorrichtung (9) mehrere separate Kupplungseinheiten (10) umfasst, deren Primärseiten im Hohlwellenbereich (25) mit der Getriebeeingangswelle (7) drehfest gekoppelt sind, und zwischen dem Schwungmassenelement (4) und der Mehrfachkupplungsvorrichtung (9) eine elektrische Maschine (11) vorgesehen ist, wobei ein Rotor (12) derart mit dem Antriebsmotor (2) und der Getriebeeingangswelle (7) gekoppelt ist, dass der Rotor (12) und die mit der Getriebeeingangswelle (7) gekoppelten Primärseiten der Mehrfachkupplungsvorrichtung (9) stets mit der Drehzahl des Antriebsmotors (2) drehen.

2. Antriebvorrichtung gemäß Anspruch 1 ,
**dadurch gekennzeichnet,**
**dass** der Rotor (12) der elektrischen Maschine (11) mit der Sekundärseite des Dämpfers (5) gekoppelt ist.

3. Antriebvorrichtung gemäß Anspruch 1 ,
**dadurch gekennzeichnet,**
**dass** der Rotor (12) der elektrischen Maschine (11) direkt oder indirekt mit der Kurbelwelle (3) gekoppelt ist.

4. Antriebssystem gemäß Anspruch 3,
**dadurch gekennzeichnet,**
**dass** der Rotor (12) der elektrischen Maschine (11) direkt oder indirekt mit der primärseitig mit den Dämpfer (5) gekoppelt ist.

5. Antriebsvorrichtung gemäß Anspruch 1,
**dadurch gekennzeichnet,**
**dass** die elektrische Maschine (11) radial außerhalb des Dämpfers (5) angeordnet ist, wobei der Dämpfer (5) vollständig innerhalb der axialen Ausdehnung der elektrischen Maschine (11) positioniert ist.

6. Antriebsvorrichtung gemäß Anspruch 5,
**dadurch gekennzeichnet,**
**dass** elektrische Maschine (11) und der Dämpfer (5) in einem Zwischengehäuse (27) eines Zwischenmoduls (14) angeordnet sind, welches über eine Flanschverbindung (16a) mit dem Antriebsmotorgehäuse (17) und über eine Flanschverbindung (16b) mit dem Getriebegehäuse (19) verbindbar ist.

7. Antriebsvorrichtung gemäß Anspruch 1
**dadurch gekennzeichnet,**
**dass** der Rotor (12) an einem Rotorträger (20) angeordnet ist, wobei der Rotorträger (20) eine Impulsgeometrie (21) aufweist, die dazu geeignet ist die Position des Rotorträgers (20) bzw. des Rotors (12) mittels eines Pollagesensor (22) zu bestimmen.

8. Antriebsvorrichtung gemäß Anspruch 1,
**dadurch gekennzeichnet,**
**dass** der Dämpfer (5) ein hydrodynamisches Dämpfungssystem umfasst.

9. Antriebsvorrichtung gemäß Anspruch 1,
**dadurch gekennzeichnet,**
**dass** die elektrische Maschine eine Transversalflussmaschine ist.

## Claims

1. Drive system (1), in particular for a motor vehicle, comprising a drive motor (2) with a crankshaft (3), comprising a flywheel mass element (4) arranged on the crankshaft (3), comprising a damper (5) which, on the primary side, is coupled to the flywheel mass element (4), comprising a transmission device (6) with a transmission input shaft (7), which has a hollow shaft region (25), and a transmission output shaft (8), wherein the transmission input shaft (7) is coupled to the secondary side of the damper (5) and a multiple clutch device (9) and at least two planetary sets are arranged between the transmission input shaft (7) and the transmission output shaft (8), **characterized in that** the multiple clutch device (9) comprises a plurality of separate clutch units (10), the primary sides of which are coupled in a rotationally fixed manner to the transmission input shaft (7) in the hollow shaft region (25), and an electrical machine (11) is provided between the flywheel mass element (4) and the multiple clutch device (9), wherein a rotor (12) is coupled to the drive motor (2) and the transmission input shaft (7) in such a way that the rotor (12) and the primary sides of the multiple clutch device (9), which primary sides are coupled to the transmission input shaft (7), always rotate at the rotation speed of the drive motor (2).

2. Drive device according to Claim 1, **characterized in that** the rotor (12) of the electrical machine (11) is coupled to the secondary side of the damper (5).

3. Drive device according to Claim 1, **characterized in that** the rotor (12) of the electrical machine (11) is directly or indirectly coupled to the crankshaft (3).

4. Drive system according to Claim 3, **characterized in that** the rotor (12) of the electrical machine (11) is directly or indirectly coupled by way of the on the primary side to the damper (5).

5. Drive device according to Claim 1, **characterized in that** the electrical machine (11) is arranged radially outside the damper (5), wherein the damper (5) is positioned completely within the axial extent of the electrical machine (11).

6. Drive device according to Claim 5, **characterized in that** the electrical machine (11) and the damper (5) are arranged in an intermediate housing (27) of an intermediate module (14) which can be connected to the drive motor housing (17) via a flange connection (16a) and to the transmission housing (19) via a flange connection (16b).

7. Drive device according to Claim 1, **characterized in that** the rotor (12) is arranged on a rotor carrier (20), wherein the rotor carrier (20) has a pulse geometry (21) which is suitable for determining the position of the rotor carrier (20) or of the rotor (12) by means of a pole position sensor (22).

8. Drive device according to Claim 1, **characterized in that** the damper (5) comprises a hydrodynamic damping system.

9. Drive device according to Claim 1, **characterized in that** the electrical machine is a transverse flux machine.

## Revendications

1. Système d'entraînement (1), notamment pour un véhicule automobile, comprenant un moteur d'entraînement (2) muni d'un vilebrequin (3), un élément de masse d'inertie (4) agencé sur le vilebrequin (3), un amortisseur (5) qui est accouplé du côté primaire avec l'élément de masse d'inertie (4), un appareil de transmission (6) muni d'un arbre d'entrée de transmission (7), qui comprend une zone d'arbre creux (25), et un arbre de sortie de transmission (8), l'arbre d'entrée de transmission (7) étant accouplé avec le côté secondaire de l'amortisseur (5), et un dispositif d'accouplement multiple (9) et au moins deux trains planétaires étant agencés entre l'arbre d'entrée de transmission (7) et l'arbre de sortie de transmission (8), **caractérisé en ce que**
le dispositif d'accouplement multiple (9) comprend plusieurs unités d'accouplement séparées (10), dont les côtés primaires sont accouplés de manière immobile en rotation dans la zone d'arbre creux (25) avec l'arbre d'entrée de transmission (7), et une machine électrique (11) est prévue entre l'élément de masse d'inertie (4) et le dispositif d'accouplement multiple (9), un rotor (12) étant accouplé avec le moteur d'entraînement (2) et l'arbre d'entrée de transmission (7) de telle sorte que le rotor (12) et les côtés primaires du dispositif d'accouplement multiple (9) accouplés avec l'arbre d'entrée de transmission (7) tournent toujours avec la vitesse de rotation du moteur d'entraînement (2).

2. Dispositif d'entraînement selon la revendication 1, **caractérisé en ce que** le rotor (12) de la machine électrique (11) est accouplé avec le côté secondaire de l'amortisseur (5).

3. Dispositif d'entraînement selon la revendication 1, **caractérisé en ce que** le rotor (12) de la machine électrique (11) est accouplé directement ou indirectement avec le vilebrequin (3).

4. Dispositif d'entraînement selon la revendication 3, **caractérisé en ce que** le rotor (12) de la machine électrique (11) est accouplé directement ou indirectement avec le côté primaire avec l'amortisseur (5) .

5. Dispositif d'entraînement selon la revendication 1, **caractérisé en ce que** la machine électrique (11) est agencée radialement à l'extérieur de l'amortisseur (5), l'amortisseur (5) étant positionné entièrement à l'intérieur de l'étendue axiale de la machine électrique (11).

6. Dispositif d'entraînement selon la revendication 5, **caractérisé en ce que** la machine électrique (11) et l'amortisseur (5) sont agencés dans un boîtier intermédiaire (27) d'un module intermédiaire (14), qui peut être relié par l'intermédiaire d'une connexion à bride (16a) avec le boîtier de moteur d'entraînement (17) et par l'intermédiaire d'une connexion à bride (16b) avec le boîtier de transmission (19).

7. Dispositif d'entraînement selon la revendication 1, **caractérisé en ce que** le rotor (12) est agencé sur un support de rotor (20), le support de rotor (20) présentant une géométrie d'impulsion (21), qui est appropriée pour déterminer la position du support de rotor (20) ou du rotor (12) au moyen d'un capteur de situation de pôle (22).

8. Dispositif d'entraînement selon la revendication 1, **caractérisé en ce que** l'amortisseur (5) comprend un système d'amortissement hydrodynamique.

9. Dispositif d'entraînement selon la revendication 1, **caractérisé en ce que** la machine électrique est une machine à flux transversal.
